# EUROPÄISCHE PATENTSCHRIFT

(11) **EP 3 350 792 B1**
(45) Veröffentlichungstag und Bekanntmachung des Hinweises auf die Patenterteilung: **29.07.2020**
(21) Anmeldenummer: 16725524.9
(22) Anmeldetag: 26.05.2016
(51) Int. Cl.: G08G 1/01, G08G 1/0965, G08G 1/0967, G08G 1/16

(54) **VORRICHTUNG, VERFAHREN UND COMPUTERPROGRAMM ZUM BEREITSTELLEN VON INFORMATION ÜBER EIN STAUENDE ÜBER EINE FAHRZEUG-ZU-FAHRZEUG-SCHNITTSTELLE**
DEVICE, METHOD AND COMPUTER PROGRAM FOR MAKING AVAILABLE INFORMATION ABOUT AN END OF A TRAFFIC JAM VIA A VEHICLE-TO-VEHICLE INTERFACE
DISPOSITIF, PROCÉDÉ ET PROGRAMME D'ORDINATEUR POUR FOURNIR DES INFORMATIONS CONCERNANT LA FIN D'UN EMBOUTEILLAGE PAR UNE INTERFACE DE VÉHICULE À VÉHICULE

(30) Priorität: 17.09.2015 DE 102015217792
(43) Veröffentlichungstag der Anmeldung: 25.07.2018
(73) Patentinhaber: Volkswagen Aktiengesellschaft, 38440 Wolfsburg (DE)
(72) Erfinder: BIEHLE, Thomas, 29393 Gross Oesingen (DE); SCHULTZ, Holger, 14612 Falkensee (DE)
(74) Vertreter: 2SPL Patentanwälte PartG mbB
(86) Internationale Anmeldenummer: PCT/EP2016/061915
(87) Internationale Veröffentlichungsnummer: WO 2017/045779

(56) Entgegenhaltungen:
- WO-A1-2013/135535
- DE-A1- 19 909 276
- DE-A1-102009 047 097
- DE-A1-102012 024 166
- JP-A- 2013 142 958

## Beschreibung

Fahrzeug-zu-Fahrzeug-Kommunikation (auch engl. Car2Car, C2C, oder Vehicle2Vehicle, V2V) und Fahrzeug-zu-Infrastruktur-Kommunikation (auch engl. Car2Infrastructure, C2I oder Vehicle2Roadside, V2R) sind ein Brennpunkt automobiler Forschung im 21. Jahrhundert. Die Kommunikation zwischen Fahrzeugen oder zwischen Fahrzeugen oder Verkehrsinfrastruktur ermöglicht eine Vielzahl neuer Möglichkeiten, beispielsweise eine Koordination von Fahrzeugen untereinander oder eine Kommunikation von Fahrzeugen mit der Verkehrsinfrastruktur, beispielsweise um den Fahrzeugen Stauwarnungen bereitzustellen. Dabei besitzen Fahrzeuge, die zur C2C oder C2I (auch zusammengefasst unter Fahrzeug-zu-X-Kommunikation, engl. Car2X, C2X oder Vehicle2X, V2X) ausgebildet sind eine Sende- und Empfangseinheit um mit anderen Fahrzeugen kommunizieren zu können, beispielsweise über direkte Funkverbindungen oder Mobilfunknetzwerke. Die Kommunikation kann dabei beispielsweise zwischen Fahrzeugen oder zwischen Fahrzeugen und Verkehrsinfrastruktur innerhalb eines Radius von wenigen hundert Metern begrenzt sein. Die Kommunikation zwischen Fahrzeugen über C2C oder C2I kann dabei verschlüsselt ablaufen, und sie kann über Zertifikate gesichert sein, beispielsweise über Langzeitzertifikate (auch engl. Long Term Certificates, LTC) oder nur begrenzt zeitlich gültige Pseudonymzertifikate (auch engl. Pseudonym Certificates, PC).

Die deutsche Patentanmeldung DE 10 2009 047097 A1 bezieht sich auf Verfahren zum Bestimmen eines Stauendes für ein Fahrzeug, wobei die Bestimmung des Stauendes basierend auf einer Fahrzeug-zu-X-Kommunikation durchgeführt wird, und wobei das Stauende weiteren Fahrzeugen über eine Fahrzeug-zu-X-Kommunikation bereitgestellt werden kann.

Die internationale Patentanmeldung WO 2013/135535 A1 bezieht sich auf ein Verfahren zur Stauerkennung mittels einer drahtlosen Fahrzeug-zu-Fahrzeug-Kommunikation, bei dem ein Ego-Fahrzeug, in dem das Verfahren durchgeführt wird, Geschwindigkeits- und Positionswerte von im Empfangsgebiet der Fahrzeug-zu-Fahrzeug-Kommunikation befindlichen Umgebungsfahrzeugen empfängt. Diese Werte werden kombiniert und ein virtuelles Fahrzeug basierend auf den kombinierten Werten erstellt. Aufgrund der Geschwindigkeit dieses virtuellen Fahrzeugs wird entschieden, ob ein Stau vorliegt.

Die deutsche Patentanmeldung DE 10 2012 024166 A1 bezieht sich auf ein Verfahren zum Warnen eines Fahrers eines Kraftfahrzeugs vor einer Staufront. Dabei wird durch ein Fahrzeug eine Prognose einer Staufront berechnet, ein aktueller Ort der Staufront empfangen, und basierend darauf die Prognose angepasst.

Das Fahren eines Fahrzeugs im Straßenverkehr ist von vielen Faktoren abhängig - beispielsweise von der Straßenführung, von Ampeln, Hindernissen aber vor allem auch von anderen Verkehrsteilnehmern, welche die gleiche, oft mehrspurige Straße befahren. Dabei kommt es häufig zu gefährlichen Fahrsituationen, etwa weil an einer schwer einsehbaren Stelle eine Gefahrensituation auftritt.

Es besteht daher der Bedarf, ein verbessertes Konzept bereitzustellen, um gefährliche Fahrsituationen zu entschärfen und eine Fahrsicherheit der beteiligen Fahrzeuge zu verbessern. Diesem Bedarf wird durch eine Vorrichtung gemäß Anspruch 1, ein Verfahren gemäß Anspruch 11 und ein Programm mit einem Programmcode gemäß Anspruch 12 Rechnung getragen.

Ausführungsbeispiele erreichen dies durch ein Bestimmen und Bereitstellen einer Information über ein Stauende. Eine Vorrichtung für ein Fahrzeug ist gemäß Ausführungsbeispielen ausgebildet, basierend auf Indikatoren über ein Ende eines Staus festzustellen, ob sich das Fahrzeug einem Ende des Staus nähert bzw. sich an einem Stauende befindet. Die Stauindikatoren können dabei beispielsweise auf kinetischen Informationen des Fahrzeugs, also beispielsweise einer Geschwindigkeit, einer Beschleunigung oder einer Bewegungsrichtung, auf kinetischen Informationen von Fahrzeugen in einer Umgebung des Fahrzeugs, oder auf Stauwarnungen anderer Fahrzeuge oder zentraler Systeme, beispielsweise Stauwarnsystemen basieren. Diese Indikatoren können kombiniert werden, um eine Wahrscheinlichkeit zu vergrößern, dass die Analyse das Ende eines Staus erkennt. Insbesondere werden von der Vorrichtung Warnblinkanlagen von Fahrzeugen in der Umgebung über einen Videosensor umfasst, und zusammen mit einem Warnblinker des eigenen Fahrzeugs und/oder einem Lenkwinkel des eigenen Fahrzeugs verwendet, um zu bestimmen, dass das Fahrzeug in naher Zukunft ein Ende eines Staus erreicht. Die Information über das Stauende wird dann über eine Fahrzeug-zu-Fahrzeug-Schnittstelle anderen Fahrzeugen zur Verfügung gestellt, etwa periodisch als Teil einer Cooperative Awareness Message (CAM, kooperative Kenntnis-Nachricht, periodische Nachricht, die über Fahrzeug-zu-Fahrzeug-Kommunikation bereitgestellt wird, und anderen Fahrzeugen einen Status des Fahrzeugs übermittelt) oder Ereignisbasiert als sogenannte Decentralized Environmental Notification Message (Dezentrale Umgebungs-Benachrichtigung, DENM), beispielsweise um von den anderen Fahrzeugen als Warnung dargestellt zu werden.

Ausführungsbeispiele schaffen eine Vorrichtung für ein Fahrzeug. Die Vorrichtung umfasst eine Einrichtung ausgebildet zum Erhalten von Indikatoren über ein Ende eines Staus. Die Indikatoren umfassen zumindest ein Element der Gruppe von Kinetische Information des Fahrzeugs oder von Fahrzeugen in einer Umgebung des Fahrzeugs und Stauwarnungen. Die Einrichtung umfasst einen Videosensor oder hat Zugriff auf einen Videosensor, um Warnblinkanlagen von Fahrzeugen in einer Umgebung des Fahrzeugs zu erkennen. Die Vorrichtung umfasst ferner eine Einrichtung ausgebildet zum Bestimmen von Information über ein Stauende basierend auf den Indikatoren. Die Information über das Stauende zeigt an, ob das Fahrzeug in naher Zukunft das Ende eines Staus erreicht. Die Vorrichtung umfasst ferner eine Fahrzeug-zu-Fahrzeug-Schnittstelle ausgebildet zum Bereitstellen der Information über das Stauende an ein oder mehrere weitere Fahrzeuge über eine Fahrzeug-zu-Fahrzeug-Kommunikationsverbindung. Die Einrichtung zum Bestimmen der Information über das Stauende ist ausgebildet, zu Bestimmen, dass das Fahrzeug in naher Zukunft das Ende eines Staus erreicht,
a) falls der Warnblinker des Fahrzeugs für zumindest eine Mindestdauer innerhalb eines Messzeitraums aktiviert worden ist, der Warnblinker von Fahrzeugen in einer Umgebung des Fahrzeugs für zumindest eine Mindestdauer innerhalb eines Messzeitraums aktiviert worden ist, und der Lenkwinkel des Fahrzeugs während eines weiteren Messzeitraums im Wesentlichen kleiner als ein oberer Lenkwinkel-Grenzwert gewesen ist,
   oder
b) falls der Lenkwinkel des Fahrzeugs während eines weiteren Messzeitraums im Wesentlichen kleiner als ein oberer Lenkwinkel-Grenzwert gewesen ist, das Fahrzeug von über einem oberen Geschwindigkeitsgrenzwert zu unter einem unteren Geschwindigkeitsgrenzwert abgebremst wurde, und der Warnblinker von Fahrzeugen in einer Umgebung des Fahrzeugs für zumindest eine Mindestdauer innerhalb eines Messzeitraums aktiviert worden ist.

Andere Fahrzeuge, die die Information über das Stauende über eine Fahrzeug-zu-Fahrzeug-Schnittstelle erhalten haben, können die Stauinformation beispielsweise nutzen, um eine Fahrsicherheit zu erhöhen, beispielsweise durch das Anzeigen von Warnungen. Das nutzen der Indikatoren zum Bestimmen kann eine Wahrscheinlichkeit oder Genauigkeit der Bestimmung erhöhen, und kann Modell- und Herstellerübergreifende Standards zur Bestimmung, ob sich ein Fahrzeug am Ende eines Staus befindet, ermöglichen. Das Bereitstellen der die Information über das Stauende über die Fahrzeug-zu-Fahrzeug-Schnittstelle kann beispielsweise ferner eine Verzögerung der Übertragung der Stauinformation reduzieren gegenüber einer zentralisierten Lösung. Das Bereitstellen der Information über das Stauende kann zudem eine Fahrsicherheit erhöhen.

In einer möglichen Weiterbildung entsprechen die Kinetischen Informationen Geschwindigkeitsinformationen, Beschleunigungsinformationen oder Lenkwinkelinformationen. Eine Nutzung der Geschwindigkeits-, Beschleunigungs- oder Lenkwinkelinformationen kann eine Erkennung einer Stausituation und eines Stauendes ermöglichen, beispielsweise durch eine Analyse der Informationen und einen Vergleich mit bekannten Situationen, Situationsmustern und Grenzwerten.

In einer möglichen Weiterbildung umfassen die Stauwarnungen zumindest ein Element der Gruppe von Warnblinker des Fahrzeugs, Warnblinker von Fahrzeugen in einer Umgebung des Fahrzeugs, Information über ein Sicherungsfahrzeug, Information über ein Stauende eines anderen Fahrzeugs, oder Stauwarnungsnachrichten. Eine Nutzung der Stauwarnungen kann eine Erkennung eines Stauendes ermöglichen oder präzisieren, da eine Kenntnis von Fahrzeugen, die sich näher am Ende des Staus befinden oder von zentralisierten Systemen genutzt werden kann, um eine Erkennung des Stauendes zu verifizieren oder eine Wahrscheinlichkeit eines Stauendes zu berechnen.

In einer möglichen Weiterbildung ist die Einrichtung zum Erhalten der Indikatoren ausgebildet, die Stauwarnungen über eine Fahrzeug-zu-Infrastruktur-Kommunikationsverbindung, eine Fahrzeug-zu-Fahrzeug-Kommunikationsverbindung, über ein Mobilkommunikationssystem, oder über ein Sensormodul zu erhalten. Das Erhalten der Indikatoren über eine Fahrzeug-zu-Fahrzeug-Kommunikationsverbindung oder einer Fahrzeug-zu-Infrastruktur-Kommunikationsverbindung kann eine Verzögerung der Übertragung der Stauwarnungen reduzieren oder eine Aktualität erhöhen gegenüber einem Mobilkommunikationssystem. Das Empfangen der Indikatoren über das Mobilkommunikationssystem kann die weitere Nutzung von zentral gesammelten oder verarbeiteten Daten ermöglichen, welche beispielsweise auf vielen verschiedenen Indikatoren basieren können. Ein Erhalten der Indikatoren über ein Sensormodul kann eine Fahranalyse von Fahrzeugen ermöglichen, die nicht über eine Fahrzeug-zu-Fahrzeug-Schnittstelle verfügen.

In einer möglichen Weiterbildung kann die Einrichtung zum Erhalten der Indikatoren ausgebildet sein, die Stauwarnungen über eine Decentralized Environmental Notification Message, DENM, über die Fahrzeug-zu-Fahrzeug-Schnittstelle zu erhalten. Das Erhalten einer Stauwarnungen über eine Ereignis-basierte DENM-Nachricht kann eine Aktualität der Stauwarnungen erhöhen.

In einer ersten Alternative der Erfindung ist die Einrichtung zum Bestimmen der Information über das Stauende ausgebildet, zu Bestimmen, dass das Fahrzeug in naher Zukunft das Ende eines Staus erreicht, falls der Warnblinker des Fahrzeugs für zumindest eine Mindestdauer innerhalb eines Messzeitraums aktiviert worden ist, der Warnblinker von Fahrzeugen in einer Umgebung des Fahrzeugs für zumindest eine Mindestdauer innerhalb eines Messzeitraums aktiviert worden ist, und wobei der Lenkwinkel des Fahrzeugs während eines weiteren Messzeitraums im Wesentlichen kleiner als ein oberer Lenkwinkel-Grenzwert gewesen ist. Hierdurch kann beispielsweise erkannt werden, dass sowohl der Fahrer des Fahrzeugs als auch andere Fahrer ein Stauende erkennen und nicht etwa abbiegen.

In einer zweiten Alternative der Erfindung ist die Einrichtung zum Bestimmen der Information über das Stauende ausgebildet, zu Bestimmen, dass das Fahrzeug in naher Zukunft das Ende eines Staus erreicht, falls der Lenkwinkel des Fahrzeugs während eines weiteren Messzeitraums im Wesentlichen kleiner als ein oberer Lenkwinkel-Grenzwert gewesen ist, das Fahrzeug von über einem oberen Geschwindigkeitsgrenzwert zu unter einem unteren Geschwindigkeitsgrenzwert abgebremst wurde, und wobei ein weiterer Indikator ein Ende eines Staus anzeigt. Hierdurch kann ein starkes Abbremsen erkannt werden, das auf ein Stauende hinweisen kann, und das durch die Erkennung des Lenkwinkels in manchen Fällen ein Abbiegen als Grund der Geschwindigkeitsänderung ausschließen kann. Der weitere Indikator kann eine Wahrscheinlichkeit der Erkennung erhöhen.

Erfindungsgemäß entspricht der weitere Indikator einem Aktivieren eines Warnblinkers von Fahrzeugen in einer Umgebung des Fahrzeugs für eine Mindestdauer innerhalb eines Messzeitraums. In einer möglichen Weiterbildung kann der weitere Indikator einem Empfangen einer Information über ein Stauende eines weiteren Fahrzeugs, einem Empfangen der Stauwarnungen von einer Pluralität von weiteren Fahrzeugen, oder einem Empfangen der Information über ein Sicherungsfahrzeug entsprechen. Der weitere Indikator kann eine Wahrscheinlichkeit der Erkennung erhöhen.

In einer möglichen Weiterbildung kann die Mindestdauer beispielsweise zwischen 2 und 5 Sekunden liegen. Der Messzeitraum kann beispielsweise eine Dauer von 5s bis 30s haben. Der weitere Messzeitraum kann beispielsweise eine Dauer zwischen 30s uns 90s haben. Der obere Geschwindigkeitsgrenzwert kann beispielsweise zwischen 60km/h und 100km/h liegen. Der untere Geschwindigkeitsgrenzwert kann beispielsweise zwischen 20km/h und 40km/h liegen. Die Nutzung der Schwellenwerte kann beispielsweise eine reproduzierbare, übertragbare oder standardisierte Bestimmung eines Stauendes ermöglichen.

In einer möglichen Weiterbildung kann die Fahrzeug-zu-Fahrzeug-Schnittstelle ferner zur Fahrzeug-zu-Infrastruktur-Kommunikation ausgebildet sein. Dadurch kann die Vorrichtung beispielsweise Stauwarnungen von einer Verkehrsinfrastruktur erhalten, oder es wird eine Weitergabe der Information über das Stauende an die Verkehrsinfrastruktur ermöglicht, beispielsweise für eine koordinierte Bestimmung einer Ausdehnung eines Staus oder eine Weitergabe der Information über das Stauende.

In einer möglichen Weiterbildung kann die Einrichtung ausgebildet sein, die Information über das Stauende ferner einer Verkehrsinfrastruktur über die Fahrzeug-zu-Fahrzeug-Schnittstelle bereitzustellen. Die Weitergabe der Information über das Stauende an die Verkehrsinfrastruktur kann beispielsweise für eine koordinierte Bestimmung einer Ausdehnung eines Staus genutzt werden oder eine Weitergabe der Information über das Stauende ermöglichen (auch engl. Relaying).

In einer möglichen Weiterbildung kann die Einrichtung beispielsweise ausgebildet sein, die Information über das Stauende als Cooperative Awareness Message, CAM, über die Fahrzeug-zu-Fahrzeug-Schnittstelle bereitzustellen. Die Bereitstellung der Information über das Stauende über CAM kann beispielsweise die vorhandenen Nachrichten nutzen und eine flächendeckende periodische Bereitstellung der Stauinformation mit einer geringen Latenz ermöglichen.

Erfindungsgemäß umfasst die Einrichtung zum Erhalten der Indikatoren ein Sensormodul, insbesondere einen Videosensor, und/oder eine Eingangsschnittstelle für einen Zugriff auf einen Videosensor. Das Nutzen eines Sensormoduls kann beispielsweise ein Erfassen von Fahrzeugen ermöglichen, die nicht mit einer Fahrzeug-zu-Fahrzeug-Schnittstelle ausgestattet sind. Die Eingangsschnittstelle kann ein Erhalten von Indikatoren von anderen Modulen oder Entitäten ermöglichen. Die Einrichtung zum Bestimmen der Information über das Stauende kann ein Berechnungsmodul umfassen und/oder einem Berechnungsmodul entsprechen. Das Berechnungsmodul kann beispielsweise die Indikatoren mit Schwellenwerten vergleichen oder eine Wahrscheinlichkeit berechnen, dass ein Ende eines Staus vorliegt.

Ausführungsbeispiele schaffen ferner ein Verfahren für ein Fahrzeug. Das Verfahren umfasst Erhalten von Indikatoren über ein Ende eines Staus. Die Indikatoren umfassen zumindest ein Element der Gruppe von Kinetische Information des Fahrzeugs oder von Fahrzeugen in einer Umgebung des Fahrzeugs und Stauwarnungen. Das Verfahren umfasst Erkennen von Warnblinkanlagen von Fahrzeugen in einer Umgebung des Fahrzeugs über einen Videosensor. Das Verfahren umfasst ferner Bestimmen von Information über ein Stauende basierend auf den Indikatoren. Die Information über das Stauende zeigt an, ob das Fahrzeug in naher Zukunft das Ende eines Staus erreicht. Es wird bestimmt, dass das Fahrzeug in naher Zukunft das Ende eines Staus erreicht,
a) falls der Warnblinker des Fahrzeugs für zumindest eine Mindestdauer innerhalb eines Messzeitraums aktiviert worden ist, der Warnblinker von Fahrzeugen in einer Umgebung des Fahrzeugs für zumindest eine Mindestdauer innerhalb eines Messzeitraums aktiviert worden ist, und der Lenkwinkel des Fahrzeugs während eines weiteren Messzeitraums im Wesentlichen kleiner als ein oberer Lenkwinkel-Grenzwert gewesen ist,
   oder
b) falls der Lenkwinkel des Fahrzeugs während eines weiteren Messzeitraums im Wesentlichen kleiner als ein oberer Lenkwinkel-Grenzwert gewesen ist, das Fahrzeug von über einem oberen Geschwindigkeitsgrenzwert zu unter einem unteren Geschwindigkeitsgrenzwert abgebremst wurde, und der Warnblinker von Fahrzeugen in einer Umgebung des Fahrzeugs für zumindest eine Mindestdauer innerhalb eines Messzeitraums aktiviert worden ist.

Das Verfahren umfasst ferner Bereitstellen der Information über das Stauende an ein oder mehrere weitere Fahrzeuge über eine Fahrzeug-zu-Fahrzeug-Kommunikationsverbindung.

Ausführungsbeispiele schaffen ferner ein Programm mit einem Programmcode zum Durchführen des Verfahrens wenn der Programmcode auf einem Computer, einem Prozessor, einem Kontrollmodul oder einer programmierbaren Hardwarekomponente ausgeführt wird.

Vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels einer Vorrichtung für ein Fahrzeug zum Bereitstellen von Information über ein Stauende;
- Fig. 2: zeigt eine beispielhafte Übersicht möglicher Kombinationen von Stauindikatoren für die Bestimmung der Stauinformation;
- Fig. 3: zeigt ein beispielhaftes Ausführungsbeispiel; und
- Fig. 4: zeigt ein Flussdiagramm eines Ausführungsbeispiels einer Vorrichtung für ein Fahrzeug zum Bereitstellen der Information über das Stauende.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Eine lokale Gefahrenerkennung kann beispielsweise durch Nutzung eines Sender und Empfänger-Prinzips verbessert werden. Ein Sender (ein vorherfahrendes Fahrzeug) kann ausgebildet sein, um zu erkennen, ob es sich einem Ende eines Staus nähert, und diese Erkenntnis an einen Empfänger (hinterherfahrendes Fahrzeug) übermitteln, der diese Erkenntnis verarbeiten kann und beispielsweise eine Warnung anzeigen kann. Der Sender kann bei der Erkennung beispielsweise auf einer Autobahn oder Schnellstraße von stehenden oder stockend fahrenden Fahrzeugen umrundet sein. Eine Zündung des Sender-Fahrzeugs ist beispielsweise aktiviert (bzw. die Klemme 15), und das Fahrzeug könnte ausgebildet sein, zu erkennen, dass es auf einer Autobahn ist, etwa über ein Geschwindigkeitsprofil, über eine digitale Karte, oder über eine Kamera). Die Auslösekriterien für ein Bestimmen eines Stauendes können periodisch oder permanent aktualisiert oder überprüft werden.

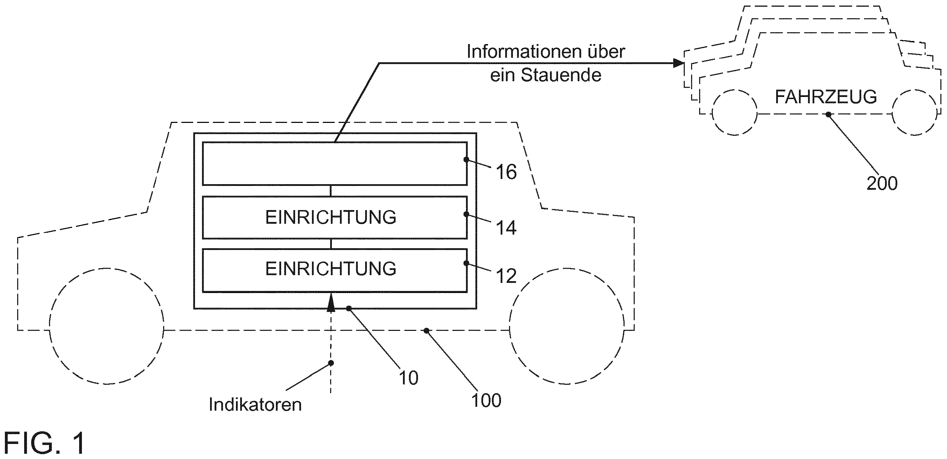

Fig. 1 illustriert ein Blockdiagramm eines Ausführungsbeispiels einer Vorrichtung 10 für ein Fahrzeug 100. Die Vorrichtung 10 umfasst eine Einrichtung 12 ausgebildet zum Erhalten von Indikatoren über ein Ende eines Staus. Die Indikatoren umfassen zumindest ein Element der Gruppe von Kinetische Information des Fahrzeugs 100 oder von Fahrzeugen in einer Umgebung des Fahrzeugs 100 und Stauwarnungen. Die Indikatoren können beispielsweise genutzt werden, um festzustellen, ob sich das Fahrzeug 100 einem Stau nähert oder sich am Ende eines Staus befindet. Die kinetischen Informationen können beispielsweise Geschwindigkeitsinformationen, Beschleunigungsinformationen oder Lenkwinkelinformationen entsprechen. Die Einrichtung 12 kann beispielsweise ausgebildet sein, die kinetischen Informationen des Fahrzeugs 100 über einen CAN-Bus des Fahrzeugs zu erhalten, oder ein Sensormodul der Einrichtung 12 kann ausgebildet sein, die kinetischen Informationen des Fahrzeugs 100 zu bestimmen, beispielsweise relativ zu einer Verkehrsinfrastruktur, oder basierend auf einem Satellitennavigationssignal, oder basierend auf einem Beschleunigungs- oder Geschwindigkeitssensor.

Die kinetischen Informationen der Fahrzeuge in einer Umgebung des Fahrzeugs 100 kann die Einrichtung 12 beispielsweise auch über ein Sensormodul erfassen, beispielsweise über einen optischen oder akustischen Laufzeitsensor, oder über einen Videosensor. Dabei kann die Einrichtung 12 beispielsweise auf ein oder mehrere Sensoren des Fahrzeugs zugreifen, beispielsweise auf Parksensoren oder Sensoren für eine zumindest teilweise Automatisierung des Fahrzeugs (z.B. für Adaptive Cruise Control, adaptives Anpassen der Geschwindigkeit). Die Einrichtung 12 kann etwa ausgebildet sein, Rohdaten der Sensoren zu verarbeiten um die Indikatoren zu bestimmen, beispielsweise über eine Bildanalyse oder eine Laufzeitanalyse. Alternativ oder zusätzlich kann die Einrichtung 12 beispielsweise ausgebildet sein, um die kinetischen Informationen der Fahrzeuge in einer Umgebung des Fahrzeugs über eine Fahrzeug-zu-Fahrzeug-Schnittstelle 16 zu erhalten. Beispielsweise können die Fahrzeuge in der Umgebung ausgebildet sein, ihre kinetischen Informationen über periodische Status-Nachrichten anderen Fahrzeugen zur Verfügung zu stellen. Sog. Cooperative Awareness Messages (CAM) eines Fahrzeug-zu-Fahrzeug-Standards sind ein beispielhaftes Ausführungsbeispiel für solche Status-Nachrichten, die die Einrichtung 12 beispielsweise über die Fahrzeug-zu-Fahrzeug-Schnittstelle 16 erhalten kann.

Die Stauwarnungen können zumindest ein Element der Gruppe von Warnblinker des Fahrzeugs 100, Warnblinker von Fahrzeugen in einer Umgebung des Fahrzeugs 100, Information über ein Sicherungsfahrzeug, Information über ein Stauende eines anderen Fahrzeugs, oder Stauwarnungsnachrichten umfassen. Die Stauwarnungen kann die Einrichtung 12 beispielsweise über eine Fahrzeug-zu-Infrastruktur-Kommunikationsverbindung, eine Fahrzeug-zu-Fahrzeug-Kommunikationsverbindung, oder über ein Mobilkommunikationssystem, etwa über ein Universal Mobile Telecommunication System (UMTS), ein Long Term Evolution (LTE)-Mobilkommunikationssystem oder ein Mobilkommunikationssystem der 5. Generation (5G), erhalten. Die Stauwarnungen können dabei eine periodischen oder ereignisabhängige Nachricht umfassen, die die Einrichtung 12 beispielsweise von anderen Fahrzeugen, von Verkehrsinfrastruktur oder von einem zentralen System, beispielsweise einem regionalen oder globalen Staumeldesystem erhalten kann. Die Einrichtung 12 kann beispielsweise ausgebildet sein die Stauwarnungen über eine sogenannte Decentralized Environmental Notification Message (Dezentrale Umgebungs-Benachrichtigung, DENM), über die Fahrzeug-zu-Fahrzeug-Schnittstelle 16 zu erhalten, etwa von einem anderen Fahrzeug oder von einer Verkehrsinfrastruktur, etwa einer Staumeldestation einer Autobahn. In manchen Ausführungsbeispielen können die Stauwarnungen beispielsweise eine Information über ein Stauende eines weiteren Fahrzeugs umfassen.

In manchen Ausführungsbeispielen kann Einrichtung 12 die Stauwarnungen über ein Sensormodul oder eine Schnittstelle erfassen. Beispielsweise kann die Einrichtung ein Signal erhalten, dass der Warnblinker des Fahrzeugs 100 aktiviert ist. Die Einrichtung 12 umfasst einen Videosensor oder greift auf einen Videosensor zu, um Warnblinkanlagen von Fahrzeugen in einer Umgebung des Fahrzeugs 100 zu erkennen. Beispielsweise kann der Videosensor lediglich auf Licht eines Wellenlängenbereichs reagieren um die Warnblinkanlagen zu erkennen. Die Einrichtung 12 kann ausgebildet sein, Rohdaten des Sensormoduls, etwa des Videosensors, zu analysieren um die Indikatoren zu bestimmen.

Die Vorrichtung 10 umfasst ferner eine Einrichtung 14 ausgebildet zum Bestimmen von Information über ein Stauende basierend auf den Indikatoren, wobei die Information über das Stauende anzeigt, ob das Fahrzeug 100 in naher Zukunft das Ende eines Staus erreicht. Die Information über das Stauende kann beispielsweise einem Datenpaket oder einem Datensignal entsprechen. Beispielsweise kann das Datenpaket oder das Datensignal die Information über das Stauende umfassen, beispielsweise kann die Information über das Stauende ein Teil des Datenpakets sein. In einem beispielhaften Ausführungsbeispiel kann die Information über das Stauende eine Information einer Reihe von Status-Informationen des Fahrzeugs 100 in einer Status-Nachricht sein, beispielsweise ein oder mehrere Bits in einem Bitvektor, wobei eine 0 im Bitvektor beispielsweise bedeuten könnte, dass sich das Fahrzeug 100 nicht an einem Stauende befindet, und eine 1, dass sich das Fahrzeug an einem Stauende befindet. Ferner kann das Datenpaket oder die Statusinformation beispielsweise Information über ein Konfidenzintervall für die Information über das Stauende umfassen, beispielsweise um anzuzeigen, für wie konkludent die Einrichtung 14 die Information über das Stauende bewertet. Die Einrichtung 14 kann beispielsweise ein Berechnungsmodul umfassen oder einem Berechnungsmodul entsprechen, das die Information über das Stauende aus den Indikatoren berechnet und kodiert, und/oder beispielsweise eine Wahrscheinlichkeit berechnet, dass die bestimmte Information über das Stauende wahr ist.

Indikatoren, die die Einrichtung 14 über die Einrichtung 12 und über die Fahrzeug-zu-Fahrzeug-Schnittstelle 16 (oder über ein Sensormodul) erhalten hat, kann die Einrichtung beispielsweise auf ihre Relevanz für das Fahrzeug 100 prüfen. Beispielsweise kann die Einrichtung 14 prüfen, ob die Fahrtrichtung eines weiteren Fahrzeugs, auf das sich der Indikator bezieht, mit der Fahrtrichtung des Fahrzeugs 100 übereinstimmt, ob eine Position des weiteren Fahrzeugs relevant ist (beispielsweise auf einer digitalen Karte nachvollziehen ob sich das weitere Fahrzeug auf einer Abbiegespur befindet), oder ob eine Entfernung des weiteren Fahrzeugs zu groß ist.

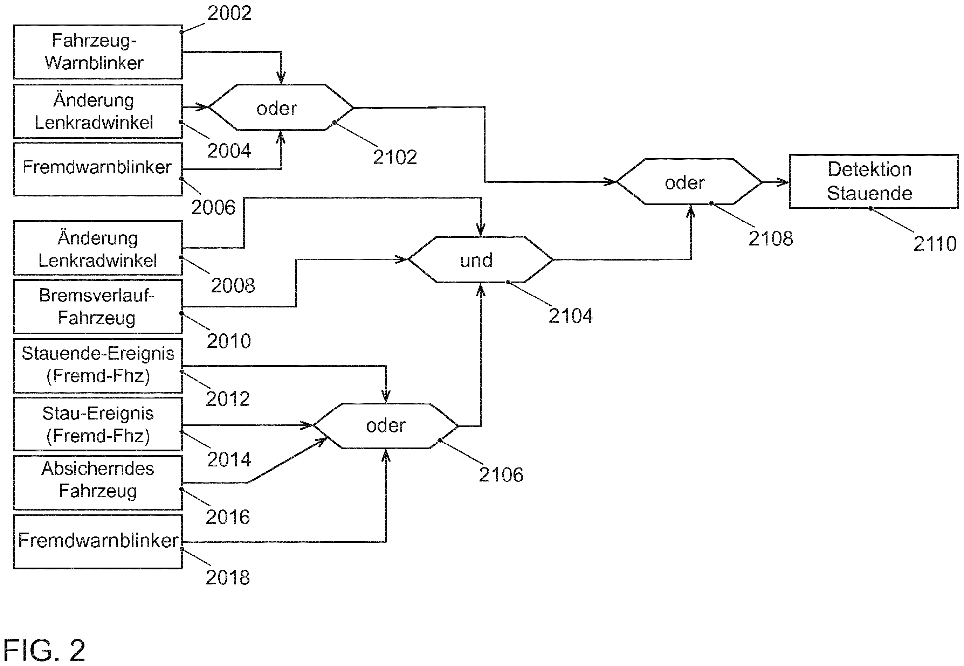

Fig. 2 zeigt eine beispielhafte Übersicht möglicher Kombinationen von Indikatoren für die Bestimmung der Information über das Stauende. Fig. 2 zeigt beispielhaft die Indikatoren Warnblinker des Fahrzeugs 2002, Änderung Lenkradwinkel 2004; 2008, Fremdwarnblinker 2006; 2018 (Warnblinker von Fahrzeugen in einer Umgebung des Fahrzeugs 100), Bremsverlauf des Fahrzeugs 2010, Stauende-Ereignis von Fahrzeugen in einer Umgebung des Fahrzeugs 100 2012, Stau-Ereignis von Fahrzeugen in einer Umgebung des Fahrzeugs 100 2014, und Absicherndes Fahrzeug 2016. Die Stauwarnungen können beispielsweise die Indikatoren 2002, 2006, 2012, 2014, 2016 und 2018 umfassen, und die kinetische Information die Indikatoren 2004, 2008 und 2010.

Die Einrichtung 14 kann beispielsweise ausgebildet sein, zu Bestimmen, dass das Fahrzeug 100 in naher Zukunft das Ende eines Staus erreicht, falls der Warnblinker des Fahrzeugs 100 für zumindest eine Mindestdauer innerhalb eines Messzeitraums aktiviert worden ist (2002), der Warnblinker von Fahrzeugen in einer Umgebung des Fahrzeugs 100 für zumindest eine Mindestdauer innerhalb eines Messzeitraums aktiviert worden ist (2006) und 2102 wobei der Lenkwinkel des Fahrzeugs 100 während eines weiteren Messzeitraums im Wesentlichen kleiner als ein oberer Lenkwinkel-Grenzwert gewesen ist (2004). Die Mindestdauer kann beispielsweise zwischen 2 und 5 Sekunden liegen. Der Messzeitraum kann beispielsweise eine Dauer von 5s bis 30s haben. Der weitere Messzeitraum kann beispielsweise eine Dauer zwischen 30s uns 90s haben. Der obere Geschwindigkeitsgrenzwert kann beispielsweise zwischen 60km/h und 100km/h liegen. Der untere Geschwindigkeitsgrenzwert kann beispielsweise zwischen 20km/h und 40km/h liegen. Der Lenkwinkel-Grenzwert kann beispielsweise einem Ändern des Lenkradwinkels von weniger als 45°, 75°, 90°, 105° oder 120° von einer Normalposition entsprechen. In zumindest manchen Ausführungsbeispielen kann der Lenkwinkel-Grenzwert genutzt werden, um festzustellen, dass das Fahrzeug 100 auf Fahrspuren einer Autobahn fährt und nicht beispielsweise auf einer Ausfahrt abbiegt und deshalb abbremst. In einigen Ausführungsbeispielen kann der Lenkwinkel genutzt werden, um eine Plausibilität einer Fahrt auf einer Schnellstraße oder Autobahn zumindest teilweise zu bestätigen. In manchen Ausführungsbeispielen kann der Lenkwinkel beispielsweise auf einer Satelliten-Positionierung oder auf Sensordaten, etwa Videosensordaten oder Beschleunigungssensordaten basieren. Der Indikator 2004 kann also beispielsweise anzeigen, dass der Lenkradwinkel des Fahrzeugs 100 in den letzten 60 Sekunden kleiner als 90° war, also das Fahrzeug im Wesentlichen geradeaus gefahren ist.

Eine weitere beispielhafte Möglichkeit einen Stau zu erkennen bieten die Indikatoren 2008 bis 2018. Die Einrichtung 14 kann ausgebildet sein, zu bestimmen, dass das Fahrzeug 100 in naher Zukunft das Ende eines Staus erreicht, falls der Lenkwinkel des Fahrzeugs 100 während des weiteren Messzeitraums im Wesentlichen kleiner als ein oberer Lenkwinkel-Grenzwert gewesen ist (2008), das Fahrzeug 100 von über einem oberen Geschwindigkeitsgrenzwert zu unter einem unteren Geschwindigkeitsgrenzwert abgebremst wurde (2010),
und 2104 wobei ein weiterer Indikator ein Ende eines Staus anzeigt (2012-2018). Der weitere Indikator kann beispielsweise einem Aktivieren eines Warnblinkers von Fahrzeugen in einer Umgebung des Fahrzeugs 100 für eine Mindestdauer, beispielsweise innerhalb eines Messzeitraums, entsprechen. Beispielsweise kann der weitere Indikator einem Aktivieren des Warnblinkers von Fahrzeugen in einer Umgebung des Fahrzeugs 100 für 3 Sekunden entsprechen (2018). Alternativ oder zusätzlich kann der weitere Indikator einem Empfangen einer Information über ein Stauende eines weiteren Fahrzeugs entsprechen (2012). Das weitere Fahrzeug kann beispielsweise ebenfalls die Vorrichtung 10 umfassen, um die Information über das Stauende bereitzustellen. Der weitere Indikator kann ferner einem Empfangen der Stauwarnungen von einer Pluralität von weiteren Fahrzeugen entsprechen (2014), oder 2106 einem Empfangen der Information über ein Sicherungsfahrzeug (2016). Die Information über ein Sicherungsfahrzeug kann beispielsweise auch einer CAM oder einer DENM entsprechen, und/oder anzeigen, dass ein Sicherungsfahrzeug, beispielsweise ein Rettungsfahrzeug, ein Abschleppfahrzeug oder ein Polizeifahrzeug sich der aktuellen Position nähert oder sich in der Nähe befindet. Sicherungsfahrzeuge können beispielsweise ein- oder mehrere Bits in einem Bitvektor einer CAM aufweisen, die anzeigen, dass diese Sicherungsfahrzeuge sind. Beide beispielhafte Möglichkeiten, die Information über das Stauende zu bestimmen, können beispielsweise alternativ oder gleichzeitig 2108 genutzt werden, um die Information über das Stauende zu bestimmen 2110.

Die Vorrichtung 10 umfasst ferner die Fahrzeug-zu-Fahrzeug-Schnittstelle 16 ausgebildet zum Bereitstellen der Information über das Stauende an ein oder mehrere weitere Fahrzeuge 200 über eine Fahrzeug-zu-Fahrzeug-Kommunikationsverbindung. Die Fahrzeug-zu-Fahrzeug-Kommunikationsverbindung kann beispielsweise über einen geteilten Kommunikationskanal stattfinden (auch engl. shared channel, broadcast channel), und die Fahrzeug-zu-Fahrzeug-Schnittstelle 16 kann ausgebildet sein, die Information über das Stauende den weiteren Fahrzeugen 200 als Nachricht an mehrere Empfänger (auch engl. Broadcast) über die Fahrzeug-zu-Fahrzeug-Kommunikationsverbindung bereitzustellen. In einigen Ausführungsbeispielen kann die Fahrzeug-zu-Fahrzeug-Kommunikationsverbindung einer direkten Kommunikationsverbindung zwischen zwei Fahrzeugen, beispielsweise ohne den Einsatz einer Basisstation, entsprechen, etwa gemäß IEEE 802.11p (einem Standard des Institute of Electrical and Electronics Engineers, Institut für Elektroingenieure).

In einigen Ausführungsbeispielen kann die Fahrzeug-zu-Fahrzeug-Schnittstelle 16 ferner zur Fahrzeug-zu-Infrastruktur-Kommunikation ausgebildet sein. Die Einrichtung 14 kann beispielsweise ausgebildet sein, um die Information über das Stauende ferner einer Verkehrsinfrastruktur über die Fahrzeug-zu-Fahrzeug-Schnittstelle 16 bereitzustellen, beispielsweise mittels einer periodischen Status-Nachricht, etwa einer CAM, oder über eine Ereignisbasierte Nachricht, etwa eine DENM.

Die Einrichtung 14 ist ein manchen Ausführungsbeispielen ausgebildet, die Information über das Stauende mehrfach zu übertragen, beispielsweise basierend auf einem (möglicherweise standardisierten) Wiederholungsintervall und basierend auf einer Wiederholungsdauer. Dabei kann beispielsweise ein Zeitblocker gesetzt werden um den Funkkanal nicht zu überfluten. Die periodische Statusnachricht kann beispielsweise einen Bitvektor umfassen, der einen Zustand des Fahrzeugs repräsentiert, und die Stauinformation kann beispielsweise in einem oder mehreren Bits des Bitvektors umfasst sein. Die periodische Status-Nachricht kann beispielsweise mit einer Wiederholungsfrequenz von 1 bis 10 Wiederholungen pro Sekunde gesendet werden. Die Ereignisbasierte Nachricht (etwa DENM) kann ebenfalls wiederholt werden, und kann die Information über das Stauende umfassen, und ferner beispielsweise einen Grund (etwa den Indikator) der Information über das Stauende und eine Position des Fahrzeugs oder des Staus. Beispielsweise kann die Information über das Stauende mit Hilfe einer Skala repräsentiert sein, etwa basierend auf einem Konfidenzintervall.

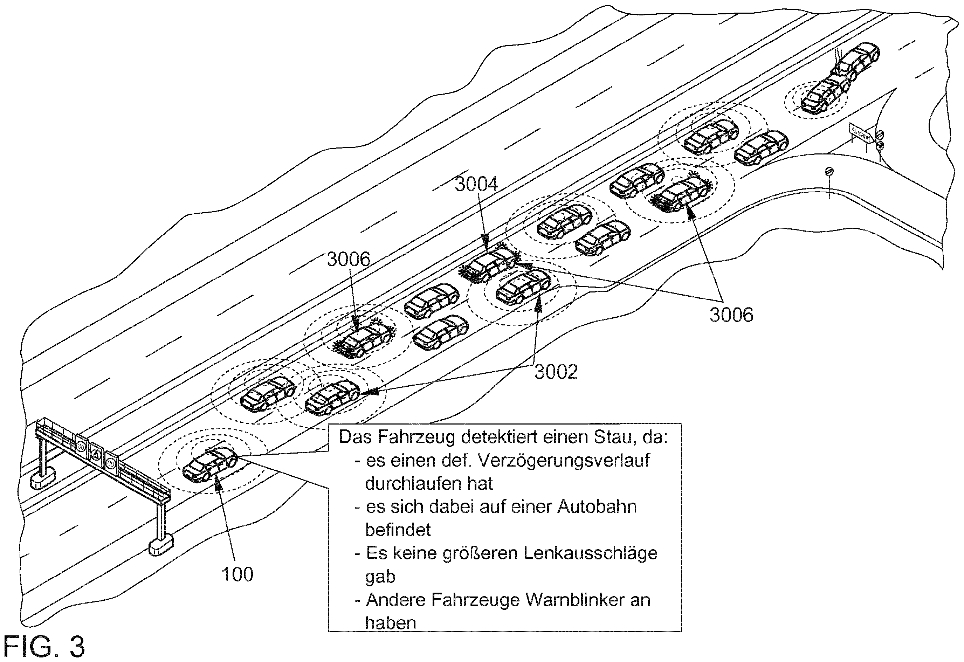

Fig. 3 zeigt ein beispielhaftes Ausführungsbeispiel, in dem sich das Fahrzeug 100 an einem Stauende befindet. Die Einrichtung 14 erkennt einen Stau dadurch, dass das Fahrzeug 100 von über einem oberen Geschwindigkeitsgrenzwert zu unter einem unteren Geschwindigkeitsgrenzwert abgebremst wurde (2010), es sich auf einer Autobahn befindet, es keine größeren Lenkausschläge gab (2008) und andere Fahrzeuge 3006 einen Warnblinker aktiviert haben. Die Einrichtung 14 ist beispielhaft ausgebildet, den Warnblinker 3006 der Fahrzeuge in der Umgebung über die Fahrzeug-zu-Fahrzeug-Schnittstelle 16 (Fahrzeuge 3002, erkennbar an den schematisch dargestellten Funksignalen) oder über ein Sensormodul zu erkennen (Fahrzeuge ohne Fahrzeug-zu-Fahrzeug-Schnittstelle 3004).

In Ausführungsbeispielen können die Einrichtung 12 und/oder die Einrichtung 14 einem beliebigen Controller oder Prozessor oder einer programmierbaren Hardwarekomponente entsprechen. Beispielsweise können die Einrichtung 12 und/oder die Einrichtung 14 auch als Software realisiert sein, die für eine entsprechende Hardwarekomponente programmiert ist. Insofern können die Einrichtung 12 und/oder die Einrichtung 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung können der Einrichtung 12 und/oder der Einrichtung 14. Die Einrichtung 14 ist mit der Einrichtung 12 und der Fahrzeug-zu-Fahrzeug-Schnittstelle 16 gekoppelt.

In einem bevorzugten Ausführungsbeispiel entspricht die Fahrzeug-zu-Fahrzeug-Schnittstelle 16 einer direkten Fahrzeug-zu-Fahrzeug-Funkschnittstelle. Die Fahrzeug-zu-Fahrzeug-Schnittstelle 16 kann beispielsweise für eine direkte Datenkommunikation mit den ein oder mehreren weiteren Fahrzeugen ausgebildet sein, beispielsweise gemäß IEEE 802.11p. Die Vorrichtung 10 kann über die Fahrzeug-zu-Fahrzeug-Schnittstelle 16 beispielsweise Datennachrichten mit Fahrzeugen in seiner Umgebung austauschen. Die Datennachrichten können beispielsweise periodisch übertragen werden, d.h. mit einer definierten Wiederholungsfrequenz werden Daten übertragen, beispielsweise Daten über einen Status des Fahrzeugs, etwa seine Geschwindigkeit, Position etc. Alternativ oder zusätzlich können die Datennachrichten Ereignisbasiert übertragen werden, d.h. basierend auf einem Ereignis wie z.B. der Erkennung eines Stauendes oder einer Erkennung einer glatten Fahrbahn. Auch Ereignisbasierte Datennachrichten können wiederholt werden, beispielsweise mit einer definierten Wiederholungsdauer und Wiederholungsfrequenz, etwa um mehr Empfänger zu erreichen oder eine Wahrscheinlichkeit eines Empfangs der Datennachrichten zu erhöhen. Die Cooperative Awareness Messages (kooperative Bekanntmachungs-Nachrichten, periodische Datennachrichten, die ein Fahrzeug verschickt, um seine Präsenz anderen Fahrzeugen kenntlich zu machen) sind ein Beispiel für periodische Datennachrichten, Decentralized Environmental Notification Message (Dezentrale Umgebungs-Benachrichtigung, DENM) ein Beispiel für ereignisbasierte Datennachrichten. Diese Datennachrichten können beispielsweise aktuelle Informationen über das Fahrzeug 100 erhalten, beispielsweise die Position und den Bewegungsvektor, aber auch beispielsweise Sensordaten wie eine Beschleunigung, Geschwindigkeit, oder berechnete Informationen wie beispielsweise die Information über das Stauende. In einigen Ausführungsbeispielen kann die Fahrzeug-zu-Fahrzeug-Schnittstelle 16 ein Übertragen von Datennachrichten über einen geteilten Kanal ermöglichen, und/oder die Fahrzeug-zu-Fahrzeug-Schnittstelle 16 kann ein Übertragen von Datennachrichten ohne einen mehrseitigen Verbindungsaufbau ermöglichen, und/oder die Fahrzeug-zu-Fahrzeug-Schnittstelle 16 kann einer Verteiler-Funkschnittstelle (auch engl. Broadcast) zum Verteilen von Datennachrichten an eine Mehrzahl von Empfängern entsprechen. In manchen Ausführungsbeispielen kann Fahrzeug-zu-Fahrzeug-Schnittstelle 16 über Frequenzen in einem 5,9Ghz-Frequenzbereich kommunizieren (z.B. zwischen 5,85Ghz und 5,925 GHz).

In zumindest manchen Ausführungsbeispielen kann ein Fahrzeug, etwa das Fahrzeug 100 oder die ein oder mehreren weiteren Fahrzeuge 200, beispielsweise einem Landfahrzeug, einem Straßenfahrzeug, einem Auto, einem Geländefahrzeug, einem Kraftfahrzeug, oder einem Lastkraftfahrzeug entsprechen.

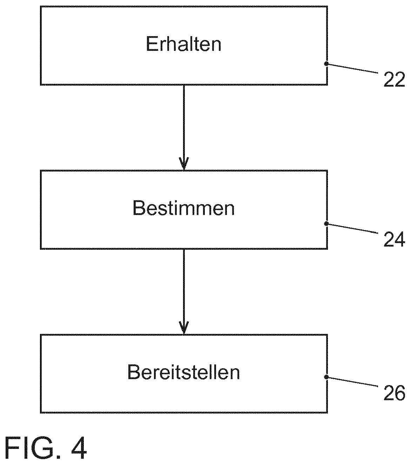

Fig. 4 zeigt ein Flussdiagramm eines Verfahrens für ein Fahrzeug 100. Das Verfahren umfasst Erhalten 22 von Indikatoren über ein Ende eines Staus. Die Indikatoren umfassen zumindest ein Element der Gruppe von Kinetische Information des Fahrzeugs 100 oder von Fahrzeugen in einer Umgebung des Fahrzeugs 100 und Stauwarnungen. Das Verfahren umfasst ferner Bestimmen 24 von Information über ein Stauende basierend auf den Indikatoren. Die Information über das Stauende zeigt an, ob das Fahrzeug 100 in naher Zukunft das Ende eines Staus erreicht. Das Verfahren umfasst ferner Bereitstellen 26 der Information über das Stauende an ein oder mehrere weitere Fahrzeuge 200 über eine Fahrzeug-zu-Fahrzeug-Kommunikationsverbindung.

Ausführungsbeispiele schaffen ferner ein Fahrzeug (100) umfassend die Vorrichtung (10).

Ein weiteres Ausführungsbeispiel ist ein Computerprogramm zur Durchführung des Verfahrens, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Einrichtung
- 14: Einrichtung
- 16: Fahrzeug-zu-Fahrzeug-Schnittstelle
- 22: Erhalten
- 24: Bestimmen
- 26: Bereitstellen
- 100: Fahrzeug
- 200: Weitere Fahrzeuge
- 2002: Warnblinker des Fahrzeugs
- 2004: Änderung Lenkradwinkel
- 2006: Fremdwarnblinker
- 2008: Änderung Lenkradwinkel
- 2010: Bremsverlauf des Fahrzeugs
- 2012: Stauende-Ereignis von Fahrzeugen in einer Umgebung des Fahrzeugs
- 2014: Stau-Ereignis von Fahrzeugen in einer Umgebung des Fahrzeugs
- 2016: Absicherndes Fahrzeug
- 2018: Fremdwarnblinker
- 2102: Und
- 2104: Und
- 2106: Oder
- 2108: Oder
- 2110: Detektion Stauende
- 3002: Fahrzeuge mit Fahrzeug-zu-Fahrzeug-Schnittstelle
- 3004: Fahrzeuge ohne Fahrzeug-zu-Fahrzeug-Schnittstelle
- 3006: Warnblinker

## Patentansprüche

1. Vorrichtung (10) für ein Fahrzeug (100), die Vorrichtung (10) umfassend
eine Einrichtung (12) ausgebildet zum Erhalten von Indikatoren über ein Ende eines Staus, wobei die Indikatoren zumindest ein Element der Gruppe von Kinetische Information des Fahrzeugs (100) oder von Fahrzeugen in einer Umgebung des Fahrzeugs (100) und Stauwarnungen umfassen, wobei die Einrichtung (12) einen Videosensor umfasst oder Zugriff auf einen Videosensor hat, um Warnblinkanlagen von Fahrzeugen in einer Umgebung des Fahrzeugs (100) zu erkennen;
eine Einrichtung (14) ausgebildet zum Bestimmen von Information über ein Stauende basierend auf den Indikatoren, wobei die Information über das Stauende anzeigt, ob das Fahrzeug (100) in naher Zukunft das Ende eines Staus erreicht; und
eine Fahrzeug-zu-Fahrzeug-Schnittstelle (16) ausgebildet zum Bereitstellen der Information über das Stauende an ein oder mehrere weitere Fahrzeuge (200) über eine Fahrzeug-zu-Fahrzeug-Kommunikationsverbindung,
wobei die Einrichtung (14) ausgebildet ist, zu Bestimmen, dass das Fahrzeug (100) in naher Zukunft das Ende eines Staus erreicht,
a) falls der Warnblinker des Fahrzeugs (100) für zumindest eine Mindestdauer innerhalb eines Messzeitraums aktiviert worden ist, der Warnblinker von Fahrzeugen in einer Umgebung des Fahrzeugs (100) für zumindest eine Mindestdauer innerhalb eines Messzeitraums aktiviert worden ist, und der Lenkwinkel des Fahrzeugs (100) während eines weiteren Messzeitraums im Wesentlichen kleiner als ein oberer Lenkwinkel-Grenzwert gewesen ist,
oder
b) falls der Lenkwinkel des Fahrzeugs (100) während eines weiteren Messzeitraums im Wesentlichen kleiner als ein oberer Lenkwinkel-Grenzwert gewesen ist, das Fahrzeug (100) von über einem oberen Geschwindigkeitsgrenzwert zu unter einem unteren Geschwindigkeitsgrenzwert abgebremst wurde, und der Warnblinker von Fahrzeugen in einer Umgebung des Fahrzeugs (100) für zumindest eine Mindestdauer innerhalb eines Messzeitraums aktiviert worden ist.

2. Die Vorrichtung (10) gemäß Anspruch 1, wobei die Kinetischen Informationen Geschwindigkeitsinformationen, Beschleunigungsinformationen oder Lenkwinkelinformationen entsprechen,

3. Die Vorrichtung gemäß einem der vorhergehenden Ansprüche, wobei die Stauwarnungen zumindest ein Element der Gruppe von Warnblinker des Fahrzeugs (100), Warnblinker von Fahrzeugen in einer Umgebung des Fahrzeugs (100), Information über ein Sicherungsfahrzeug, Information über ein Stauende eines anderen Fahrzeugs, oder Stauwarnungsnachrichten umfassen.

4. Vorrichtung (10) gemäß einem der vorhergehenden Ansprüche, wobei die Einrichtung (12) ausgebildet ist, die Stauwarnungen über eine Fahrzeug-zu-Infrastruktur-Kommunikationsverbindung, eine Fahrzeug-zu-Fahrzeug-Kommunikationsverbindung, über ein Mobilkommunikationssystem, oder über ein Sensormodul zu erhalten.

5. Vorrichtung (10) gemäß Anspruch 4, wobei die Einrichtung (12) ausgebildet ist, die Stauwarnungen über eine Decentralized Environmental Notification Message, DENM, über die Fahrzeug-zu-Fahrzeug-Schnittstelle (16) zu erhalten.

6. Vorrichtung gemäß einem der vorherigen Ansprüche, wobei die Mindestdauer zwischen 2 und 5 Sekunden liegt,
wobei der Messzeitraum eine Dauer von 5s bis 30s hat,
wobei der weitere Messzeitraum eine Dauer zwischen 30s uns 90s hat,
wobei der obere Geschwindigkeitsgrenzwert zwischen 60km/h und 100km/h liegt, und/oder wobei der untere Geschwindigkeitsgrenzwert zwischen 20km/h und 40km/h liegt.

7. Vorrichtung (10) gemäß einem der vorhergehenden Ansprüche, wobei die Fahrzeug-zu-Fahrzeug-Schnittstelle (16) ferner zur Fahrzeug-zu-Infrastruktur-Kommunikation ausgebildet ist.

8. Vorrichtung (10) gemäß Anspruch 7, wobei die Einrichtung (14) ausgebildet ist, die Information über das Stauende ferner einer Verkehrsinfrastruktur über die Fahrzeug-zu-Fahrzeug-Schnittstelle (16) bereitzustellen.

9. Vorrichtung (10) gemäß Anspruch 1, wobei die Einrichtung (14) ausgebildet ist, die Information über das Stauende als Cooperative Awareness Message, CAM, über die Fahrzeug-zu-Fahrzeug-Schnittstelle (16) bereitzustellen.

10. Vorrichtung (10) gemäß einem der vorhergehenden Ansprüche, wobei die Einrichtung (12) ein Sensormodul und/oder eine Eingangsschnittstelle umfasst, und/oder wobei die Einrichtung (14) ein Berechnungsmodul umfasst und/oder einem Berechnungsmodul entspricht.

11. Verfahren für ein Fahrzeug (100), umfassend
Erhalten (22) von Indikatoren über ein Ende eines Staus, wobei die Indikatoren zumindest ein Element der Gruppe von Kinetische Information des Fahrzeugs (100) oder von Fahrzeugen in einer Umgebung des Fahrzeugs (100) und Stauwarnungen umfassen;
Erkennen von Warnblinkanlagen von Fahrzeugen in einer Umgebung des Fahrzeugs (100) über einen Videosensor;
Bestimmen (24) von Information über ein Stauende basierend auf den Indikatoren, wobei die Information über das Stauende anzeigt, ob das Fahrzeug (100) in naher Zukunft das Ende eines Staus erreicht, wobei bestimmt wird, dass das Fahrzeug (100) in naher Zukunft das Ende eines Staus erreicht,
a) falls der Warnblinker des Fahrzeugs (100) für zumindest eine Mindestdauer innerhalb eines Messzeitraums aktiviert worden ist, der Warnblinker von Fahrzeugen in einer Umgebung des Fahrzeugs (100) für zumindest eine Mindestdauer innerhalb eines Messzeitraums aktiviert worden ist, und der Lenkwinkel des Fahrzeugs (100) während eines weiteren Messzeitraums im Wesentlichen kleiner als ein oberer Lenkwinkel-Grenzwert gewesen ist,
oder
b) falls der Lenkwinkel des Fahrzeugs (100) während eines weiteren Messzeitraums im Wesentlichen kleiner als ein oberer Lenkwinkel-Grenzwert gewesen ist, das Fahrzeug (100) von über einem oberen Geschwindigkeitsgrenzwert zu unter einem unteren Geschwindigkeitsgrenzwert abgebremst wurde, und der Warnblinker von Fahrzeugen in einer Umgebung des Fahrzeugs (100) für zumindest eine Mindestdauer innerhalb eines Messzeitraums aktiviert worden ist; und
Bereitstellen (26) der Information über das Stauende an ein oder mehrere weitere Fahrzeuge (200) über eine Fahrzeug-zu-Fahrzeug-Kommunikationsverbindung.

12. Programm mit einem Programmcode zum Durchführen des Verfahrens nach Anspruch 11 wenn der Programmcode auf einem Computer, einem Prozessor, einem Kontrollmodul oder einer programmierbaren Hardwarekomponente ausgeführt wird.

## Claims

1. Apparatus (10) for a vehicle (100), the apparatus (10) comprising
a device (12) designed to obtain indicators about an end of a queue, wherein the indicators comprise at least one element from the group comprising kinetic information of the vehicle (100) or from vehicles in surroundings of the vehicle (100) and queue warnings, wherein the device (12) comprises a video sensor or has access to a video sensor in order to detect hazard warning lights of vehicles in surroundings of the vehicle (100);
a device (14) designed to determine information about a queue end on the basis of the indicators, wherein the information about the queue end indicates whether the vehicle (100) will reach the end of a queue in the near future; and
a vehicle-to-vehicle interface (16) designed to provide information about the queue end to one or more further vehicles (200) via a vehicle-to-vehicle communication connection,
wherein the device (14) is designed to determine that the vehicle (100) will reach the end of a queue in the near future
a) if the hazard warning lights of the vehicle (100) have been activated for at least a minimum time within a measurement period, the hazard warning lights of vehicles in surroundings of the vehicle (100) have been activated for at least a minimum time within a measurement period, and the steering angle of the vehicle (100) has been substantially less than an upper steering angle limit value during a further measurement period,
or
b) if the steering angle of the vehicle (100) has been substantially less than an upper steering angle limit value during a further measurement period, the vehicle (100) has been slowed from above an upper speed limit value to below a lower speed limit value, and the hazard warning lights of vehicles in surroundings of the vehicle (100) have been activated for at least a minimum time within a measurement period.

2. Apparatus (10) according to Claim 1, wherein the kinetic information corresponds to speed information, acceleration information or steering angle information.

3. Apparatus according to either of the preceding claims, wherein the queue warnings comprise at least one element from the group comprising hazard warning lights of the vehicle (100), hazard warning lights of vehicles in surroundings of the vehicle (100), information about a safety vehicle, information about a queue end from another vehicle, or queue warning messages.

4. Apparatus (10) according to one of the preceding claims, wherein the device (12) is designed to obtain the queue warnings via a vehicle-to-infrastructure communication connection, a vehicle-to-vehicle communication connection, via a mobile communication system or via a sensor module.

5. Apparatus (10) according to Claim 4, wherein the device (12) is designed to obtain the queue warnings via a decentralized environmental notification message, DENM, via the vehicle-to-vehicle interface (16).

6. Apparatus according to one of the preceding claims, wherein the minimum time is between 2 and 5 seconds,
wherein the measurement period has a duration of 5 s to 30 s,
wherein the further measurement period has a duration of between 30 s and 90 s,
wherein the upper speed limit value is between 60 km/h and 100 km/h,
and/or wherein the lower speed limit value is between 20 km/h and 40 km/h.

7. Apparatus (10) according to one of the preceding claims, wherein the vehicle-to-vehicle interface (16) is further designed for vehicle-to-infrastructure communication.

8. Apparatus (10) according to Claim 7, wherein the device (14) is designed to further provide the information about the queue end to a traffic infrastructure via the vehicle-to-vehicle interface (16) .

9. Apparatus (10) according to Claim 1, wherein the device (14) is designed to provide the information about the queue end as a cooperative awareness message, CAM, via the vehicle-to-vehicle interface (16).

10. Apparatus (10) according to one of the preceding claims, wherein the device (12) comprises a sensor module and/or an input interface, and/or wherein the device (14) comprises a calculation module and/or corresponds to a calculation module.

11. Method for a vehicle (100), comprising
obtaining (22) indicators about an end of a queue, wherein the indicators comprise at least one element from the group comprising kinetic information of the vehicle (100) or from vehicles in surroundings of the vehicle (100) and queue warnings;
detecting hazard warning lights of vehicles in surroundings of the vehicle (100) via a video sensor; determining (24) information about a queue end on the basis of the indicators, wherein the information about the queue end indicates whether the vehicle (100) will reach the end of a queue in the near future, wherein it is determined that the vehicle (100) will reach the end of a queue in the near future
a) if the hazard warning lights of the vehicle (100) have been activated for at least a minimum time within a measurement period, the hazard warning lights of vehicles in surroundings of the vehicle (100) have been activated for at least a minimum time within a measurement period, and the steering angle of the vehicle (100) has been substantially less than an upper steering angle limit value during a further measurement period,
or
b) if the steering angle of the vehicle (100) has been substantially less than an upper steering angle limit value during a further measurement period, the vehicle (100) has been slowed from above an upper speed limit value to below a lower speed limit value, and the hazard warning lights of vehicles in surroundings of the vehicle (100) have been activated for at least a minimum time within a measurement period; and
providing (26) the information about the queue end to one or more further vehicles (200) via a vehicle-to-vehicle communication connection.

12. Program having a program code for performing the method according to Claim 11 when the program code is executed on a computer, a processor, a monitoring module or a programmable hardware component.

## Revendications

1. Dispositif (10) destiné à un véhicule (100), le dispositif (10) comprenant
un moyen (12) conçu pour obtenir des indicateurs concernant la fin d'un embouteillage, dans lequel les indicateurs comprennent au moins un élément du groupe constitué d'informations cinétiques du véhicule (100) ou de véhicules dans un environnement du véhicule (100) et des signalisations d'embouteillage, dans lequel le moyen (12) comprend ou a accès à un capteur vidéo destiné à détecter des feux de détresse de véhicules situés à proximité du véhicule (100) ;
un moyen (14) conçu pour déterminer une informations concernant une fin d'embouteillage sur la base desdits indicateurs, dans lequel l'information concernant la fin d'embouteillage indique si le véhicule (100) atteindra la fin d'un embouteillage dans un avenir proche ; et une interface de véhicule à véhicule (16) conçue pour fournir les informations concernant la fin d'embouteillage à un ou plusieurs autres véhicules (200) par l'intermédiaire d'une liaison de communication de véhicule à véhicule,
dans lequel le moyen (14) est conçu pour déterminer que le véhicule (100) atteindra la fin d'un embouteillage dans un avenir proche,
a) si le feu de détresse du véhicule (100) a été activé pendant au moins une durée minimale au cours d'une période de mesure, le feu de détresse de véhicules se trouvant à proximité du véhicule (100) a été activé pendant au moins une durée minimale au cours d'une période de mesure, et l'angle de braquage du véhicule (100) a été sensiblement inférieur à une limite supérieure d'angle de braquage pendant une autre période de mesure, ou
b) si l'angle de braquage du véhicule (100) a été sensiblement inférieur à une limite supérieure d'angle de braquage pendant une autre période de mesure, le véhicule (100) a été freiné d'une limite supérieure de vitesse à une limite inférieure de vitesse, et les feux de détresse de véhicules situés à proximité du véhicule (100) ont été activés pendant au moins une durée minimale au cours d'une période de mesure.

2. Dispositif (10) selon la revendication 1, dans lequel les informations cinétiques correspondent à des informations de vitesse, à des informations d'accélération ou à des informations d'angle de braquage.

3. Dispositif selon l'une des revendications précédentes, dans lequel les signalisations d'embouteillage comprennent au moins un élément du groupe constitué de feux de détresse du véhicule (100), de feux de détresse de véhicules situés à proximité du véhicule (100), d'informations concernant un véhicule de sécurité, d'informations concernant une fin d'embouteillage d'un autre véhicule ou des messages de signalisation d'embouteillage.

4. Dispositif (10) selon l'une des revendications précédentes, dans lequel le moyen (12) est conçu pour recevoir les signalisations d'embouteillage par l'intermédiaire d'une liaison de communication de véhicule à infrastructure, d'une liaison de communication de véhicule à véhicule, par l'intermédiaire d'un système de communication mobile, ou par l'intermédiaire d'un module de capteur.

5. Dispositif (10) selon la revendication 4, dans lequel le dispositif (12) est conçu pour recevoir les signalisations d'embouteillage par l'intermédiaire d'un Message de Notification Environnemental Décentralisé, DENM, par l'intermédiaire de l'interface de véhicule à véhicule (16).

6. Dispositif selon l'une des revendications précédentes, dans lequel la durée minimale est comprise entre 2 et 5 secondes,
dans lequel la période de mesure a une durée de 5 s à 30 s,
dans lequel l'autre période de mesure a une durée comprise entre 30 s et 90 s,
dans lequel la limite supérieure de vitesse se situe entre 60 km/h et 100 km/h,
et/ou dans lequel la limite inférieure de vitesse se situe entre 20 km/h et 40 km/h.

7. Dispositif (10) selon l'une des revendications précédentes, dans lequel l'interface de véhicule à véhicule (16) est en outre conçue pour la communication de véhicule à infrastructure.

8. Dispositif (10) selon la revendication 7, dans lequel le dispositif (14) est conçu pour fournir en outre une information concernant la fin d'embouteillage à une infrastructure de trafic par l'intermédiaire de l'interface de véhicule à véhicule (16).

9. Dispositif (10) selon la revendication 1, dans lequel le dispositif (14) est conçu pour fournir l'information concernant la fin d'embouteillage sous la forme d'un Message de Vigilance Coopérative, CAM, par l'intermédiaire de l'interface de véhicule à véhicule (16) .

10. Dispositif (10) selon l'une des revendications précédentes, dans lequel le dispositif (12) comprend un module de capteur et/ou une interface d'entrée, et/ou dans lequel le moyen (14) comprend un module de calcul et/ou correspond à un module de calcul.

11. Procédé destiné à un véhicule (100) comprenant l'obtention (22) d'indicateurs concernant la fin d'un embouteillage, dans lequel les indicateurs comprennent au moins un élément du groupe constitué d'informations cinétiques du véhicule (100) ou de véhicules dans un environnement du véhicule (100) et des signalisations d'embouteillage ;
la détection de feux de détresse de véhicules situés à proximité du véhicule (100) par l'intermédiaire d'un capteur vidéo ;
la détermination (24) d'une information concernant une fin d'embouteillage sur la base desdits indicateurs, dans lequel l'information concernant la fin d'embouteillage indique si le véhicule (100) atteindra la fin d'un embouteillage dans un avenir proche, dans lequel il est déterminé que le véhicule (100) atteindra la fin d'un embouteillage dans un avenir proche,
a) si le feu de détresse du véhicule (100) a été activé pendant au moins une durée minimale au cours d'une période de mesure, le feu de détresse de véhicules se trouvant à proximité du véhicule (100) a été activé pendant au moins une durée minimale au cours d'une période de mesure, et l'angle de braquage du véhicule (100) a été sensiblement inférieur à une limite supérieure d'angle de braquage pendant une autre période de mesure, ou
b) si l'angle de braquage du véhicule (100) a été sensiblement inférieur à une limite supérieure d'angle de braquage pendant une autre période de mesure, le véhicule (100) a été freiné d'une limite supérieure de vitesse à une limite inférieure de vitesse, et les feux de détresse de véhicules situés à proximité du véhicule (100) ont été activés pendant au moins une période minimale au cours d'une période de mesure ; et
la fourniture (26) de l'information concernant la fin d'embouteillage à un ou plusieurs autres véhicules (200) par l'intermédiaire d'une liaison de communication de véhicule à véhicule.

12. Programme comprenant un code de programme permettant de mettre en œuvre le procédé selon la revendication 11 lorsque le code de programme est exécuté sur un ordinateur, un processeur, un module de commande ou un composant matériel programmable.
